# EUROPEAN PATENT APPLICATION

(11) **EP 4 403 363 A2**
(43) Date of publication of application: **24.07.2024**
(21) Application number: 24181664.4
(22) Date of filing: 25.12.2020
(51) Int. Cl.: B41F 17/36

(54) **EDIBLE-BODY MARKING DEVICE AND METHOD THEREFOR**

(30) Priority: 21.01.2020 JP 2020007238
(62) Divisional of application: 20915470.7
(71) Applicant: Qualicaps Co., Ltd., Nara 639-1032 (JP)
(72) Inventor: SAKURAMOTO, Hiroshi, Yamatokoriyama-shi, Nara, 639-1032 (JP); IKEUCHI, Kyosuke, Yamatokoriyama-shi, Nara, 639-1032 (JP)
(74) Representative: Isarpatent

(57) **Abstract**

An edible-body marking device (1) has a carrier device (20) that carries an edible body, a detection part (210) that detects the edible body, and a laser processing part (220) that forms a marking pattern on the edible body by using laser light. The carrier device sequentially carries the edible body to the detection part (210) and the laser processing part (220). The detection part images (210) the edible body to acquire orientation information regarding an orientation of the edible body, and the laser processing part (220) has a memory part that stores in advance multiple pieces of marking procedure information regarding formation procedures of the marking pattern in association with their respectively different pieces of the orientation information, and forms the marking pattern on the edible body according to the marking procedure information extracted from the memory part based on the orientation information acquired by the detection part (210).

## Description

### Technical Field

This invention relates to an edible-body marking device and a method to form a marking pattern on edible bodies such as medicine or food.

### Background Art

Known as a conventional edible-body marking device is a configuration disclosed in Patent Document 1 for example. This marking device is provided with a carrying means to carry edible bodies, a detection means to detect edible bodies, and a marking means to form a marking pattern on edible bodies by laser light scanning, and configured so that edible bodies carried by the carrying means are imaged by the detection means to acquire orientation data of the edible bodies, and the marking means forms a preset marking pattern according to the orientations of the edible bodies according to the orientation data.

### Citation List

### Patent Literature

Patent Literature 1: WO No. 2015/008742

### Summary of Invention

### Technical Problem

In general, in forming a marking pattern such as a character or logo by laser light scanning on carried works, marking start and end points are preset so as to allow an efficient formation within a short time.

For example, in marking with characters "XYZ" in the order of "Z", "Y", and "X" in a one-stroke drawing manner along a dividing line of tablets by the marking device of Patent Document 1 mentioned above, as shown in Fig. 15a, if a tablet E moves in the same direction as the order of "XYZ" formed on the opposite side of engraved marks S across the dividing line C, because the moving distance La of the tablet E while a laser-irradiated point moves from the start point SP to the end point EP is short, the formation of the marking pattern M can be completed within a short time.

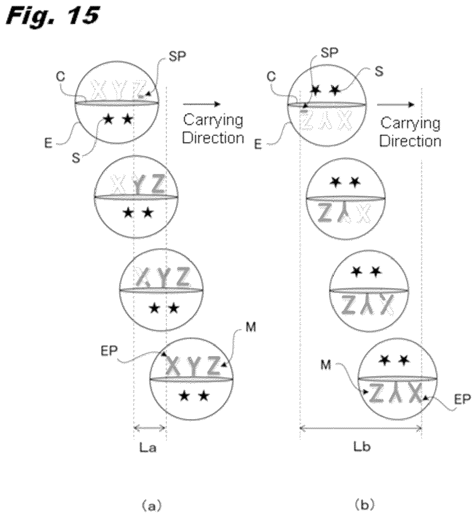

However, because the orientation of the carried tablet E is random, as shown in Fig. 15b, if the orientation of the tablet E is vertically reversed, thereby the tablet E moves in the opposite direction of the order of "XYZ", the moving distance Lb of the tablet E while scanning is performed from the start point SP to the end point EP becomes longer, therefore the formation of the marking pattern M could take a longer time. On the other hand, if the moving speed of the tablet E is increased for reducing the formation time of the marking pattern M, the scanning speed of laser light needs to be increased accordingly, causing a problem that marking quality declines.

Then, the objective of this invention is to offer an edible-body marking device and a method that can perform laser marking swiftly and precisely regardless of the orientations of edible bodies.

### Solution to Problem

The objective of the invention is achieved with an edible-body marking device comprising a carrier device that carries an edible body, a detection part that detects the edible body, and a laser processing part that forms a marking pattern on the edible body by using laser light, wherein the carrier device sequentially carries the edible body to the detection part and the laser processing part. Wherein, the detection part images the edible body to acquire orientation information regarding an orientation of the edible body, and the laser processing part has a memory part that stores in advance multiple pieces of marking procedure information regarding formation procedures of the marking pattern in association with their respectively different pieces of the orientation information, and forms the marking pattern on the edible body according to the marking procedure information extracted from the memory part based on the orientation information acquired by the detection part.

In the edible-body marking device, the multiple pieces of the marking procedure information preferably have mutually different marking start points in the marking patterns.

The multiple pieces of marking procedure information each preferably have the marking start points set on a downstream side of a center of the edible body in a carrying direction.

The detection part preferably further acquires position information regarding a position of the edible body, and the laser processing part is able to form the marking pattern on the edible body based on the orientation information and the position information.

The laser processing part is able to form the marking pattern on the edible body that is packaged in a transparent packaging material through which the laser light is transmitted.

The objective of the present invention is achieved by an edible-body marking method comprising a detection step that detects an edible body carried by a carrier device, and a marking step that form a marking pattern on the edible body. The detection step images the edible body to acquire orientation information regarding an orientation of the edible body, and the marking step forms the marking pattern on the edible body according to marking procedure information extracted based on the orientation information acquired in the detection step from a memory part that memorizes multiple pieces of marking procedure information in association with respectively different pieces of the orientation information.

The marking step is able to form the marking pattern on the edible body that is packaged in a transparent packaging material through which the laser light is transmitted.

### Advantageous Effects of Invention

The edible-body marking device and method of this invention allow swift and precise laser marking regardless of the orientations of edible bodies.

### Brief Description of Drawings

Fig. 1 is an outline configuration diagram of an edible-body marking device of an embodiment of this invention.
Fig. 2 is an enlarged view of a main part of the edible-body marking device shown in Fig. 1.
Fig. 3 is a block diagram showing another main part of the edible-body marking device shown in Fig. 1.
Fig. 4 is a diagram showing an example of marking procedure information table.
Fig. 5 is a diagram for explaining a marking method by the edible-body marking device shown in Fig. 1.
Fig. 6 is a diagram for explaining a marking procedure.
Fig. 7 is a diagram showing schematically an edible body marked by the marking procedure shown in Fig. 6.
Fig. 8 is a diagram for explaining a marking procedure.
Fig. 9 is a diagram showing schematically an edible body marked by the marking procedure shown in Fig. 8.
Fig. 10 is a diagram showing another example of marking procedure information table.
Fig. 11 is a diagram for explaining a marking procedure.
Fig. 12 is a diagram showing schematically an edible body marked by the marking procedure shown in Fig. 11.
Fig. 13 is a diagram showing a main part modification example of the edible-body marking device shown in Fig. 1.
Fig. 14 is an outline configuration diagram showing another modification example of the edible-body marking device shown in Fig. 1.
Fig. 15 is a diagram showing schematically an edible body marked by a conventional method.

### Description of Embodiments

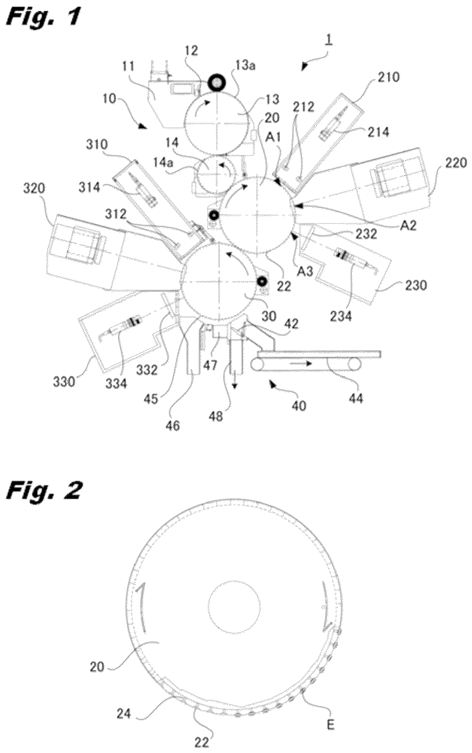

Below, an embodiment of this invention is explained referring to attached drawings. Fig. 1 is an outline configuration diagram of an edible-body marking device of an embodiment of this invention. As shown in Fig. 1, the edible-body marking device 1 is provided with a supply device 10 that supplies edible bodies, a first carrier device 20 that receives edible bodies supplied from the supply device 10 and carries them, a second carrier device 30 that receives edible bodies from the first carrier device 20 and carries them, and a discharge device 40 that receives edible bodies from the second carrier device 30 and discharges them to the outside.

The supply device 10 is provided with a hopper 11 into which thrown are edible bodies having a regular shape such as tablet, capsule, or empty capsule, a feeder 12 that aligns edible bodies inside the hopper 11, and a supply drum 13 that carries edible bodies guided by the feeder 12, and edible bodies are supplied from the supply drum 13 to the first carrier device 20 via an intermediate drum 14. The supply drum 13 and the intermediate drum 14 are provided with many holding parts 13a or 14a made of recesses aligned along the axial direction and the circumferential direction of their cylindrical outer circumferential faces, allowing them to suction-hold and carry edible bodies accommodated in their holding parts 13a or 14a, respectively.

The first carrier device 20 is formed in a drum shape in the same manner as the supply drum 13 and the intermediate drum 14, and as shown partially cut out in Fig. 2, many holding parts 22 that hold edible bodies E are installed with equal intervals along both the circumferential direction and the axial direction. Each holding part 22 has a suction hole 24 formed on its bottom, and can suction-hold an edible body E accommodated in the holding part 22 through the suction hole 24 by depressurizing the interior of the first carrier device 20 and carry the edible body E along the rotational direction of the first carrier device 20 while preventing the orientation of the edible body E from changing while carrying it.

The second carrier device 30 is configured in the same manner as the first carrier device 20, having holding parts 32 formed on its drum-shaped outer circumferential face. Edible bodies carried by the first carrier device 20 are front-back reversed when they are handed over to the second carrier device 30, and are carried to the discharge device 40.

In the edible-body marking device 1 provided with the above-mentioned configuration, a first detection part 210, a first laser processing part 220, and a first marking inspection part 230 are installed in the vicinity of the first carrier device 20 sequentially along the carrying direction of the first carrier device 20.

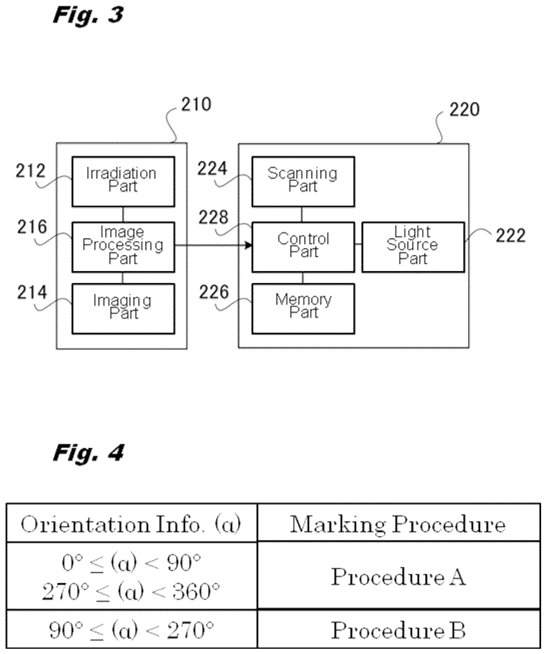

Fig. 3 is a block diagram of the first detection part 210 and the first laser processing part 220. As shown in Figs. 1 and 3, the first detection part 210 is provided with an irradiation part 212 that irradiates edible bodies carried to a detection area A1 with illumination light, an imaging part 214 such as a CCD area camera or CCD line camera that images edible bodies from a different direction from the irradiation direction of the irradiation part 212, and an image processing part 216 that processes image information of edible bodies imaged by the imaging part 214 to acquire orientation information of the edible bodies.

The irradiation part 212 is a ring lighting for example, and can irradiate each edible body uniformly from its whole circumference. If the edible body is a tablet having a groove-shaped dividing line, orientation information of the edible body can be acquired in the image processing part 216 based on an image of the dividing line of the edible body acquired by the imaging part 214. Although orientation information is not particularly limited as far as it can identify the orientation of each edible body, in this embodiment it is an angle indicating the orientation of a dividing line relative to the carrying direction and set within a range of 0-360 degrees. Distinguishing the upper and lower parts of each edible body across its dividing line (e. g., judging whether orientation information is 0 degree or 180 degrees) can utilize its characteristic such as engraving or a mark formed on the edible body, or its outer shape if the edible body has a heteromorphic outer shape (such as a tear shape).

Note that detecting the orientation of each edible body is not limited to the method that detects its divining line. For example, if multiple recesses are formed on the edible body, these recesses can be utilized as alignment marks to detect its orientation. Also, if the form of each edible body is non-circular such as polygonal or elliptical, the orientation of the edible body can be detected from part or the whole of its outline. Position information and orientation information regarding the position and orientation of edible bodies detected in the first detection part 210 are individually associated with the arrangement of edible bodies on the first carrier device 20 and output to the first laser processing part 220 and the first marking inspection part 230 by Ethernet communication, serial communication, or the like.

The first laser processing part 220 is provided with a light source part 222 that emits laser light, a scanning part 224 that scans laser light emitted from the light source part 222 by a Galvano scanner, a memory part 226 that memorizes information on a marking pattern, and a control part 228 that controls the output of the light source part 222 and the scanning by the scanning part 224, and can perform marking by laser-spot scanning of edible bodies carried to a marking area A2. Note that although the memory part 226 is built in the first laser processing part 220, a memory device separate from the first laser processing part 220 can be utilized. Laser light emitted from the light source part 222 should preferably enter the surface of each edible body approximately vertically, thereby variation in laser-irradiated area on the surface of the edible body is minimized, suppressing variation in marking density, etc.

Listed as examples of laser light emitted from the light source part 222 are solid laser light such as YVO₄ laser light, YLF laser light, or YAG laser light, gas laser light such as excimer laser light or carbon dioxide laser light, and liquid laser light such as dye laser light. Although listed as a preferable example of edible-body marking method is coloring the surface of each edible body by having it contain discoloration-inducing oxide such as titanium oxide, yellow iron sesquioxide, or iron sesquioxide, marking can also be performed by shaving part of its surface, and is not particularly limited.

The marking pattern memorized in the memory part 226 is, for example, a character, symbol, shape, or their combination, and stored in advance as coordinate information in a reference coordinate system. The control part 228 converts the coordinate information in the reference coordinate system into coordinate information in a processing coordinate system based on position and orientation information of each edible body input from the first detection part 210, and controls driving the scanning part 224 in this processing coordinate system, thereby forming the marking pattern according to the orientation of the edible body.

Also, the memory part 226 memorizes marking procedure information in association with orientation information. The marking procedure information is information on the forming procedure of a marking pattern, and if the marking pattern is formed in a one-stroke drawing manner for example, it contains coordinate information in the reference coordinate system of the marking start and end points, on/off information of the light source part 222 for forming blanks between characters, etc. Multiple pieces of marking procedure information having different marking start points are memorized in association with orientation information so as to efficiently form the marking(s) according to the orientation of each edible body.

Fig. 4 is a diagram showing an example of marking procedure information table memorized in the memory part 226. In the marking procedure information table shown in Fig. 4, two marking procedures (procedures A and B) having different start points are associated with angle ranges of orientation information.

The first marking inspection part 230 is provided with an irradiation part 232 that irradiates edible bodies carried to an inspection area A3 with illumination light, and an imaging part 234 such as a CCD area camera or CCD line camera that images edible bodies. The irradiation part 232 should preferably irradiate them so as to clarify a marking pattern formed on the surface of each edible body, and for example, diffuses irradiation light from a light source such as LEDs by a diffusing light-guiding plate to induce surface emission.

The first marking inspection part 230 has reference pattern information corresponding to the marking pattern stored in advance in the memory part, extracts marking pattern information from information acquired by the imaging part 234 imaging edible bodies, and compares it with the reference pattern information based on orientation information input from the first detection part 210, thereby inspecting marking accuracy of edible bodies. Because the preset reference pattern information is set in the reference coordinate system, after correcting the marking pattern information (or correcting the reference pattern information) based on position information and orientation information of edible bodies input from the first detection part 210, the marking pattern information is compared with the reference pattern information to perform pattern matching etc.

Also, installed in the vicinity of the second carrier device 30 are a second detection part 310, a second laser processing part 320, and a second marking inspection part 330 sequentially along the carrying direction of the second carrier device 30. The configurations of the second detection part 310, the second laser processing part 320, and the second marking inspection part 330 are the same as the configurations of the first detection part 210, the first laser processing part 220, and the first marking inspection part 230, where the second detection part 310 is provided with an irradiation part 312 and an imaging part 314, and the second marking inspection part 330 is provided with an irradiation part 332 and an imaging part 334. The second carrier device 30 receives edible bodies from the first carrier device 20 and carries them, and the second laser processing part 320 performs marking on the opposite face from the face where a marking pattern was formed while being carried by the first carrier device 20.

The discharge device 40 is provided with a sorting part 42 that sorts edible bodies based on the results of marking inspections in the first marking inspection part 230 and the second marking inspection part 330, and only good products are guided to a discharge conveyer 44 to be discharged.

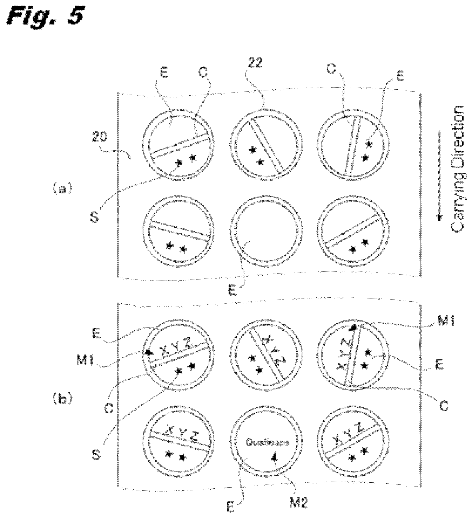

Next, explained is a method to perform marking on edible bodies using the edible-body marking device 1 provided with the above-mentioned configuration. Edible bodies E supplied from the supply device 10 to the first carrier device 20 shown in Fig. 1 are individually accommodated in the holding parts 22 so as to be aligned in the axial direction of the first carrier device 20 as shown in Fig. 5a. At this time, the orientations of a dividing line C and engraved marks S formed on each edible body E are random.

Once the edible bodies E are carried to the detection area A1 of the first detection part 210, the imaging part 214 images the edible bodies E in each row for their image information, and the image processing part 216 acquires orientation information of the edible bodies E based on the image information containing the dividing line C and the engraved marks S. The acquired orientation information is sent to the first laser processing part 220. Note that for any edible body E whose acquired image information has no dividing line C, such fact is output instead of orientation information.

Subsequently, once the edible bodies E are carried to the marking area A2 of the first laser processing part 220, as shown in Fig. 5b, marking is performed according to the orientation of each edible body E, forming a marking pattern M1 along the dividing line C. The formation procedure of the marking pattern M1 is determined based on orientation information of the edible body E according to the marking procedure information table shown in Fig. 4.

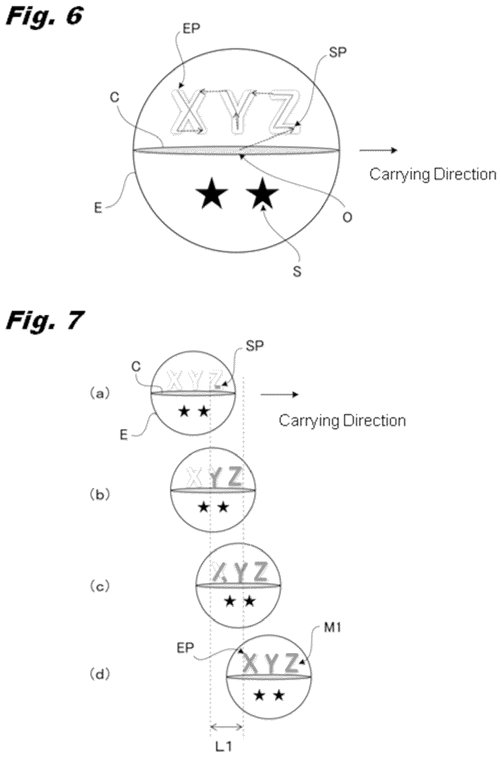

For example, if orientation information (an angle of the dividing line C relative to the moving direction) is 0 degree, the procedure A is selected from the marking procedure information table, and as shown in Fig. 6, the laser irradiation point moves from its origin O that is the center of the edible body E to the start point SP as indicated with a broken arrow to start marking, and marking is performed until the end point EP intervened with marking-off periods indicated with broken arrows, thereby marking with "Z", "Y", and "X" in that order. By marking an edible body E carried as shown in Figs. 7a-d according to this marking procedure information, forming the marking pattern M1 can be completed with a short moving distance L1.

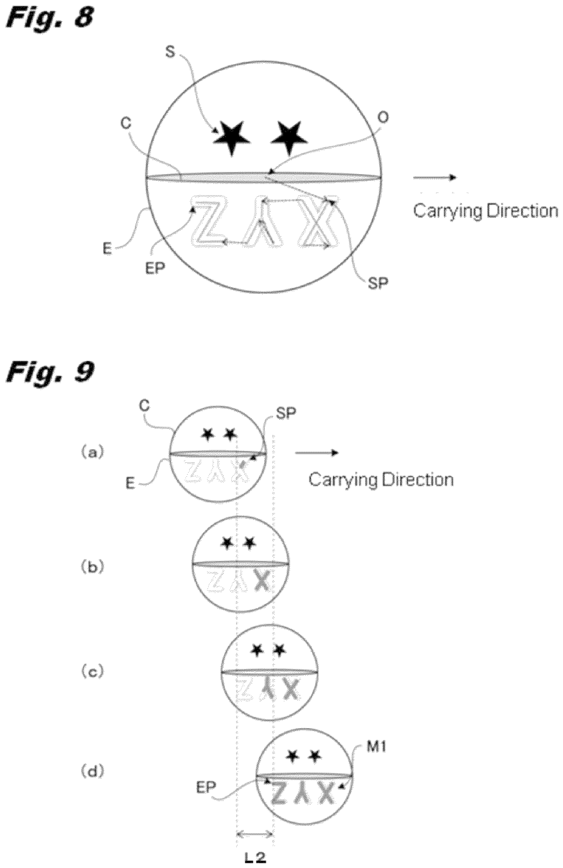

On the other hand, if orientation information is 180 degrees, the procedure B is selected from the marking procedure information table shown in Fig. 4, and as shown in Fig. 8, the start point SP and the end point EP are set so that marking is performed in the order of "X", "Y", and "Z". By marking an edible body E carried as shown in Figs. 9a-d according to this marking procedure information, forming the marking pattern M1 can be completed with a short moving distance L2 in this case as well.

In this manner, by forming the marking pattern M1 on an edible body E according to the marking procedure information extracted from the memory part 226 based on the orientation information acquired by the first detection part 210, regardless of the orientation of the edible body E, swift and precise marking can be performed on the edible body E with a short carrying distance.

The marking pattern M1 only needs to be formed considering the orientation of the dividing line C and need not necessarily be formed along the dividing line C as far as it does not overlap with the dividing line for example. For an edible body E having no dividing line C, as shown in Fig. 5b, a marking pattern M2 that is different from the above-mentioned marking pattern M1 may be formed, or no marking pattern may be formed.

If there is no need to distinguish the upper and lower parts of an edible body as in the case of a circular edible body having no engraved mark S, orientation information can be set to a range of 0-180 degrees. In this case, as the marking procedure information table shown in Fig. 4, for example, two kinds of procedures can be set for the case of 0 degree or greater and smaller than 45 degrees or 135 degrees or greater and smaller than 180 degrees, and the case of 45 degrees or greater and smaller than 135 degrees.

Next, once edible bodies E are carried to the inspection area A3 of the first inspection part 230, the imaging part 234 acquires image information of the edible bodies E in each row. Afterwards, inclination of marking pattern information is corrected based on the orientation information acquired by the first detection part 210, the corrected marking pattern information is compared with the preset reference pattern information, and marking precision is inspected by a publicly-known inspection method such as pattern matching.

After marking and inspection are performed on one face of the edible bodies E in this manner, the edible bodies E are handed from the first carrier device 20 over to the second carrier device 30, and sequentially carried to the second detection part 310, the second laser processing part 320, and the second marking inspection part 330, thereby marking and marking inspection are performed on the other face of the edible bodies E in the same manner as mentioned above. In other words, in the second laser processing part 320 marking on edible bodies is performed according to the marking procedure information extracted based on the orientation information acquired by the second detection part 310, and in the second marking inspection part 330 a marking precision inspection is performed based on the orientation information acquired by the second detection part 310. In the second laser processing part 320 and the second marking inspection part 330, instead of the orientation information acquired by the second detection part 310, marking and marking inspection can be performed based on the orientation information acquired by the first detection part 210, thereby marking directions on the front and back of edible bodies can be matched.

Afterwards, the edible bodies E are carried from the second carrier device 30 to the discharge device 40. To the discharge device 40, marking quality judgement information of each edible body E is input from the first marking inspection part 230 and the second marking inspection part 330, and edible bodies E judged as good are guided to the discharge conveyer 44 via the sorting part 42 while edible bodies E judged as bad are blown out by air in a bad product discharge part 45 and guided to a bad product discharge chute 46. A bad product discharge checking sensor 47 checks whether any edible body E judged as bad remains in the second carrier device 30, and if a bad edible body E remains, it is guided to a waste chute 48 in the sorting part 42.

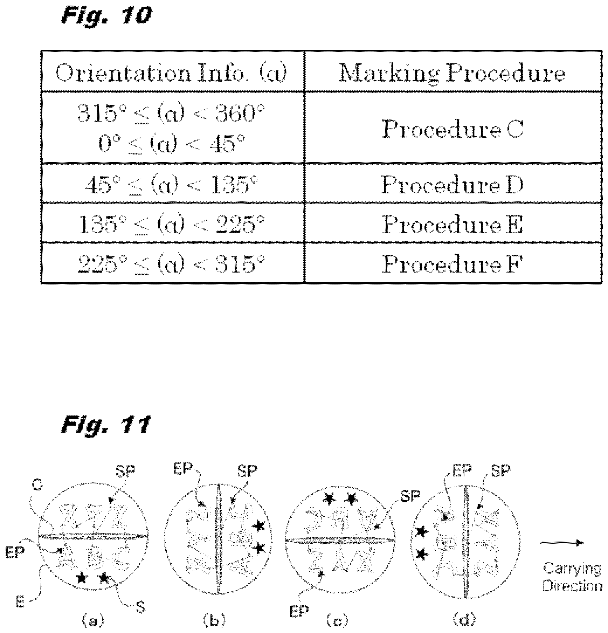

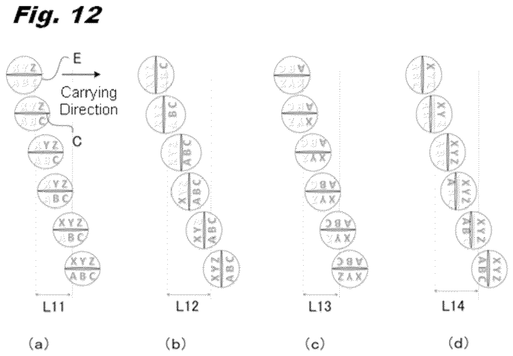

Although the marking procedure information memorized in the memory part 226 has two procedures A and B, it is not particularly limited as far as there are multiple procedures. For example, if characters "XYZ" and "ABC" are printed on both sides across the dividing line of each edible body, as in a marking procedure information table shown in Fig. 10, four pieces of marking procedure information (procedures C-F) can be associated with orientation information at every 90 degrees. Figs. 1a-d correspond to the procedures C-F in Fig. 10, having mutually different start points SP in their marking patterns. Figs. 12a-d show edible bodies marked according to the marking procedures C-F when orientation information is 0, 90, 180, or 270 degrees, respectively. Carrying distances L11, L12, L13, and L14 until completing the marking pattern formation are all suppressed to short distances, and swift and precise marking is possible regardless of the orientations of edible bodies E. Note that engraved marks S are omitted in Fig. 12.

Each marking procedure information should preferably have the marking start point set on the downstream side of the center of each edible body (origin) in the carrying direction (e. g., the right side of the origin O in Fig. 8), thereby swift marking can be securely performed.

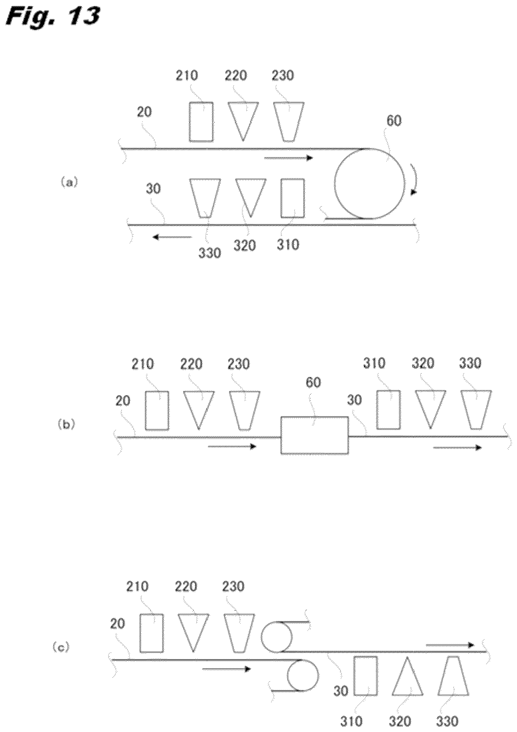

Although both the first carrier device 20 and the second carrier device 30 are made carrier drums in this embodiment, another configuration can be adopted as far as the posture of each edible body held does not change while being carried. For example, as shown in Figs. 13a and 13b, both the first carrier device 20 and the second carrier device 30 can be made conveyer devices such as slat conveyers or belt conveyers, and edible bodies carried horizontally by the first carrier device 20 can be front-back reversed by a reversing mechanism 60 and mounted and carried horizontally on the second carrier device 30, thereby marking can be performed on both the front and back faces of the edible bodies in the same manner as in this embodiment. Also, as shown in Fig. 13c, the second carrier device 30 can be configured of a suction belt having suction holes that allow vacuum suction of edible bodies from above, the edible bodies carried horizontally from the first carrier device 20 can be suction-held by the second carrier device 30, and marking can be performed from below, thereby marking can be performed on both the front and back faces of the edible bodies. In Figs. 13a-c the same codes are given to the same components as in Fig. 1. Also, the first detection part 210, the first laser processing part 220, and the first marking inspection part 230 need not be arranged along the same carrier drum (or conveyer device). For example, in the edible-body marking device 1 shown in Fig. 1, a new carrier drum or the like can be placed between the supply device 10 and the first carrier device 20, and a new detection device can be installed so as to detect one face of edible bodies carried by this carrier drum to acquire orientation information of the edible bodies. According to this configuration, marking and marking inspection can be performed on the other face of the edible bodies based on the orientation information acquired from the one face of the edible bodies, thereby even if the marking target face has nothing to indicate its orientation such as a dividing line, marking can be performed according to the orientations of the edible bodies.

Forming a marking pattern on edible bodies by the first laser processing part 220 (or the second laser processing part 320) can also be performed to edible bodies such as PTP packaged in a transparent packaging material (such as transparent plastic) that transmits laser light, where marking procedure information can be extracted based on orientation information acquired by the first detection part 210 (or the second detection part 310) through the packaging material, and a marking pattern can be formed on the edible bodies through the packaging material. The kind of laser light in this case can also be selected as appropriate according to the packaging material etc. from those mentioned above.

Also, although making on the front and back faces of edible bodies is made possible by marking while the edible bodies are being carried by the first carrier device 20 and the second carrier device 30 in this embodiment, for example, if marking is performed only on one face of edible bodies having a dividing line formed on both faces, the edible body marking device 1 can be configured so as to perform marking only while the edible bodies are being carried by the first carrier device 20 without being provided with the second carrier device 30, the second detection part 310, the second laser processing part 320, or the second marking inspection part 330 placed in its vicinity.

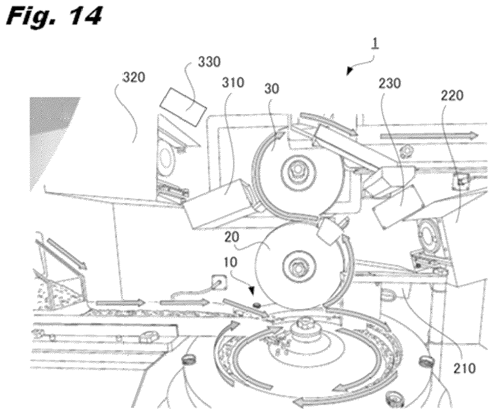

Although the edible body marking device 1 in this embodiment has a multiple-row system where the first carrier device 20 and the second carrier device 30 are provided with multiple holding parts 22 in the rotation axis direction, it can have a configuration where edible bodies are carried one by one. Fig. 14 is an outline configuration diagram showing an example such single-row system marking device, and the same codes are given to the components having the same functions as those in Fig. 1.

The edible-body marking device 1 shown in Fig. 14 is a carrier device where a supply device 10 aligns edible bodies by the rotation of a rotating disk, and a first carrier device 20 and a second carrier device 30 each comprise a suction roller that vacuum-sucks edible bodies to their respective outer circumferential faces. By the marking device 1 shown in Fig. 14, edible bodies aligned into a single row by the supply device 10 are carried upwards as the single row by the first carrier device 20 and the second carrier device 30, and marking is performed onto their front and back faces by a first laser processing part 220 and a second laser processing part 320. The carrying speed of edible bodies should preferably be as high as possible for swift and efficient marking, and preferably be set within a range of 100-2000 mm/sec for example.

### Reference Signs List

- 1:: edible-body marking device
- 20:: first carrier device
- 210:: first detection part
- 212:: irradiation part
- 214:: imaging part
- 216:: image processing part
- 220:: first laser processing part
- 222:: light source part
- 224:: scanning part
- 226:: memory part
- 228:: control part
- 230:: first marking inspection part
- 232:: irradiation part
- 234:: imaging part

## Claims

1. An edible-body marking device (1) comprising:
a carrier device (20) configured to carry an edible body,
a detection part (210) configured to detect the edible body, and
a laser processing part (220) configured to form a marking pattern on the edible body by using laser light, wherein the carrier device (20) is configured to sequentially carry the edible body to the detection part (210) and the laser processing part (220), wherein
the detection part (210) images the edible body to acquire orientation information regarding an orientation of the edible body, and
the laser processing part (220) configured to form the marking pattern on the edible body by extracting marking procedure information regarding formation procedures of the marking pattern, which is stored in advance in a memory part, based on the orientation information acquired by the detection part.

2. The edible-body marking device (1) according to Claim 1, wherein
the detection part (210) further acquires position information regarding a position of the edible body, and
the laser processing part (220) forms the marking pattern on the edible body based on the orientation information and the position information.

3. The edible-body marking device (1) according to any of Claim 1 or Claim 2, wherein
the laser processing part (220) acquires the orientation information from a one face of the edible body, and forms the marking pattern on the other face of the edible body.

4. The edible-body marking device (1) according to any of Claim 1 to Claim 3, wherein
the laser processing part (220) makes start points of the marking patterns that are mutually different among the plurality of the edible bodies based on different pieces of the orientation information among the edible bodies.

5. The edible-body marking device (1) according to any of Claim 1 to Claim 4, wherein
the laser processing part (220) starts the making procedure from a downstream side in a carrying direction rather than a center of the edible body.
